(19) Europäisches Patentamt
European Patent Office
Office européen des brevets

(11) EP 1 526 150 A1

(12) EUROPEAN PATENT APPLICATION

(43) Date of publication:
**27.04.2005 Bulletin 2005/17**

(51) Int Cl.⁷: **C08G 77/14**, C09D 183/04, C09D 163/00

(21) Application number: **03447265.4**

(22) Date of filing: **23.10.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **SigmaKalon Services B.V.**
**1422 AD Uithoorn (NL)**

(72) Inventors:
- **Mill, Sibel**
**85521 Riemerling (DE)**
- **de Vries, Gerard**
**1087 AS Amsterdam (NL)**
- **Altena, Sietse**
**1422 MP Uithoorn (NL)**
- **Gillard, Michel**
**1348 Louvain-La-Neuve (BE)**

(74) Representative:
**Brants, Johan Philippe Emile et al**
**De Clercq, Brants & Partners cv**
**Edgard Gevaertdreef 10a**
**9830 Sint-Martens-Latem (BE)**

Remarks:
Claims 11 - 19 are deemed to be abandoned due to non-payment of the claims fees (Rule 31 (2) EPC).

# (54) Anti-skid coating compositions

(57) The present invention relates to a coating composition comprising at least two components:

a component (A) comprising:

- a polysiloxane of formula (1) in a amount ranging from 10 to 80 % by weight, wherein each $R^1$ is independently selected from the group comprising alkyl and aryl radicals, each $R^2$ is independently selected from the group comprising hydrogen, alkyl and aryl radicals, n is selected so that the molecular weight for the polysiloxane is in the range of from 400 to 10,000, $R^3$ is a bivalent radical or $-O-R^3-(X)_z$ is hydroxy, alkoxy or aryloxy, z is 1, 2 or 3 and X is a reactive functional group for reacting with amine radicals and wherein 0 to 90 % of $-O-R^3-(X)_z$ is hydroxy, alkoxy or aryloxy,

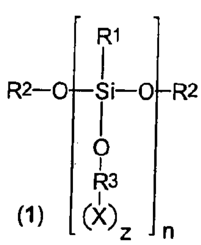

(1)

- one or more filler and/or an aggregate in an amount ranging from 20 to 90 % by weight,
- optionally one or more pigment
- optionally one or more additive, and

a component (B) comprising

- one or more amino hardener and
- optionally one or more catalyst.

EP 1 526 150 A1

## Description

### Field of the invention

The present invention relates to anti-skid coating compositions suitable for use in marine applications, as well as for any other applications requiring surfaces that are anti-skid, hardwearing, weather resistant, heat resistant, and resistant to degradation by radiation, in particular ultraviolet radiation. The invention also relates to anti-skid coatings formed by curing such coating compositions. These coatings are useful in particular in providing durable, non-skid surfaces.

### Background to the invention

Anti-skid coatings that are also weather resistant have been sought for many years, especially in marine applications, tank coating industry (e.g., coating water tanks, railroad tankers, oil refinery and natural gas refinery storage tanks, etc.), transit industries (e.g., railcars, aircraft, etc.), and architectural and construction industries (e.g., buildings, roofing, signs, etc.). These coatings are mainly sought to prevent personnel and hardware from sliding on the coated surfaces, and to protect the underlying surfaces from corrosion and other damage.

For example, it is generally desirable that coatings used on deck surfaces of ship and in other marine applications provide a non-skid surface under wet conditions. These structures are subjected to repeated causes of abrasion and necessitate very durable surfacing which resist the cause of abrasion. These structures should also have surfaces that are extremely resistant to the hard wear imposed by weather conditions. In each case, marine operations at sea under varying weather conditions demand a durable, non-skid coating to prevent disasters.

Various anti-skid compositions are known for coating substrates and other structural materials in order to impart slip resistance thereto, as summarized in Journal of Protective Coatings and Linings, June 2003, pages 4-8 and 40-49. U.S. Pat. N° 3,527,146 discloses a non-skid coating composition that comprises a bonding composition and an aggregate. The aggregate is an elastomeric polymer such as ground vulcanized rubber. US patent N° 5,686,507 describes non-skid flooring compositions comprising a standard epoxy resin mixed with a polyamide resin, a filler and aramid in form of fibers or flakes. U.S patent N° 4,760,103 discloses a non-skid coating formulation comprising resins, pigments, solvents and aggregates and optionally fiber fillers such as polypropylene to aid in forming a coarse structure. U.S patent N° 5,110,657 discloses an anti-skid coating containing urea formaldehyde resin polyvinyl acetate and an aggregate such as walnut shells. U.S. patent N° 4,774,278 describes an anti-skid coating composition comprising a conventional resin component and a silicon resin in combination with an organopolysiloxane. U.S patent N° 4,859,522 describes a multi-coat nonskid surfacing comprising a two components isocyanate-system comprising a hydroxylated vinyl terpolymer and a polyisocyanate hardener.

These formulations however do not meet current requirements for wear or service life. Moreover increasing awareness about environment and health and safety for human beings calls for extra attention in the preparation of safe paints. Increasing strictness of environmental rules demands a decrease of the emission of harmful solvents. Paint systems with low VOC contents are required. Nowadays in some countries, the use of isocyanates is not allowed anymore because of safety and health regulations. There is an urge to replace these isocyanate cured polyurethane coatings by non-isocyanate coatings (NISO). Coating materials with improved chemical, corrosion, impact, abrasion and slip resistance are needed for the protection of structures used in marine industries, tank coating industry, transit industries, architectural and construction industries.

It is a main object of the present invention to provide a coating composition that has anti-skid or slip-resistant properties. It is another object of the present invention to provide a coating composition that cures into a coating that is resistant to chemical attack and corrosion. It is yet another object of the present invention to provide a coating composition that is resistant to mechanical loads such as impacts, erosion, wear or abrasion. It is yet another object of the present invention to provide a coating composition that is resistant to physical loads such as UV rays, fire or bad weather conditions. It is another object of the present invention to provide an anti-skid coating composition which is high solid, has low VOC content and is NISO and can be applied without undue health or environmental risks.

### Summary of the invention

The present invention relates to a coating composition, which imparts clear anti-skid or slip resistant properties to a substrate coated therewith. The anti-skid coating compositions of the present invention are composed of at least two components: a component (A) comprising:

- a polysiloxane of formula (1) in a amount ranging from 10 to 80 % by weight, wherein each $R^1$ is independently selected from the group comprising alkyl and aryl radicals, each $R^2$ is independently selected from the group

comprising hydrogen, alkyl and aryl radicals, n is selected so that the molecular weight for the polysiloxane is in the range of from 400 to 10,000, $R^3$ is a bivalent radical or -O-$R^3$-$(X)_z$ is hydroxy, alkoxy or aryloxy, z is 1, 2 or 3 and X is a reactive functional group for reacting with amine radicals and wherein 0 to 90 % of -O-$R^3$-$(X)_z$ is hydroxy, alkoxy or aryloxy,

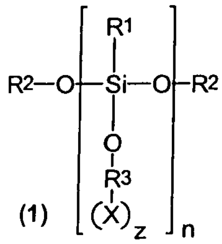

(1)

- one or more filler and/or an aggregate in an amount ranging from 20 to 90 % by weight, optionally one or more pigment, optionally one or more additive, and

a component (B) comprising one or more amino hardener and optionally one or more catalyst.

It was surprisingly found that the substrates coated with the coating composition according to the invention exhibit a high degree of skid resistance. These coatings when applied create a surface profile with enhanced and improved non-skid properties over the current art. Another advantage to the coatings is their high degree of strength. They can withstand severe impacts of cables, tail hooks, and airplanes. Moreover, they provide extremely skid resistant high friction surfaces. These coating compositions have high solid content and are NISO.

In a preferred embodiment the component (A) comprises said filler and/or aggregate in an amount ranging from 40 to 90%, preferably from 50 to 90 %, more preferably from 65 to 80%.

The filler and/or aggregate may be any suitable filler and/or aggregate known in the art such as for example aluminum oxide, aluminum/iron oxide, barium sulphate, boron nitride, boron powder, calcite and clays, corundum particles, garnet, glass, ground limestone, ground walnut shells gypsum, kaolin, magnesium oxide, metal grains, micas, mixture of chlorite (hydrosilicate of magnesium, potassium and aluminum) mica and quartz, nepheline syenite (anhydrous sodium potassium aluminum silicate), particles of plastic materials, particles of pumice stone, perlite, quartz, rubber chips, silica, siliceous sand, silicon carbide, silicon dioxide, slag, talc, tungsten carbide powder, waste plastic aggregate, wollastonite, and the like or any combination of these.

**Detailed Description of the Invention**

The present invention provides coating compositions having non-skid properties. As used herein the term "non-skid, non-slip, anti-skid or anti-slip coatings" are used interchangeably and refers to coating that dries to a rough, abrasive surface that resists sliding of people and machinery on floors, ship decks, ladder treads and the like.

The coating composition of the present invention comprises a component (A) comprising: a polysiloxane of formula (1) in a amount ranging from 10 to 80 % by weight, wherein each $R^1$ is independently selected from the group comprising alkyl and aryl radicals, each $R^2$ is independently selected from the group comprising hydrogen, alkyl and aryl radicals, n is selected so that the molecular weight for the polysiloxane is in the range of from 400 to 10,000, $R^3$ is a bivalent radical or -O-$R^3$-$(X)_z$ is hydroxy, alkoxy or aryloxy, z is 1, 2 or 3 and X is a reactive functional group for reacting with amine radicals and wherein 0 to 90 % of -O-$R^3$-$(X)_z$ is hydroxy, alkoxy or aryloxy,

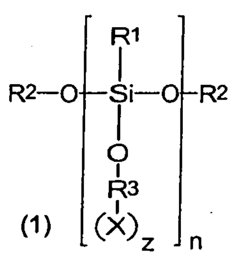

(1)

one or more filler and/or an aggregate in an amount ranging from 20 to 90 % by weight, optionally one or more pigment, optionally one or more additive, and

a component (B) comprising one or more amino hardener and optionally one or more catalyst.

The combination of a polysiloxane resin with the amino hardener and with a high concentration of the filler and/or aggregate in said composition surprisingly produced a coating with improved slip resistant properties. This combination has been found to dramatically improve the anti-skid properties of said coating composition.

With respect to the polysiloxane to be used in component (A), it is to be understood that formula (1) is illustrative only, and that the polysiloxane of formula (1) may contain from 0 to 90% of alkoxy, aryloxy or hydroxy radicals.

According to an embodiment, the polysiloxane of formula (1) for use in the coating composition according to the invention, has preferably the following stoichiometric formula

$$R^1_a R^2_b (R^{10}O)_c SiO_{\frac{(4-a-b-c)}{2}},$$

wherein each $R^{10}$ is independently selected from hydrogen, alkyl, aryl or $-R^3-(X)_z$, and $R^1$, $R^2$, $R^3$, X and z have the same meaning as that defined above, a and b are each a real number from 0.0 to 2.0, more in particular from 0.1 to 2.0, c is a real number from 0.1 to 1.0, b/a is ranging from 0.2 to 2.0 and a+b+c is lower than 4, and wherein 0 to 90 % of $-O-R^{10}$ is hydroxy, alkoxy or aryloxy. In a preferred embodiment, the reactive functional group X for reacting with amine radicals is selected from the group comprising unsaturated ester, imidyl, phthalimidyl, cyclocarbonate, acetylalkanoate, acetylalkylamide, epoxy, cyclic anhydride, carbamate, isocyanate, vinyl.

As used herein, the term "independently selected" indicates that the each radical R so described, can be identical or different. For example, each $R^1$ in compound of formula (1) may be different for each value of n.

As used herein "a real number" refers to a number, which is positive and includes integers and fractions of integers or any rational or irrational number. For example a is a real number from 0.0 to 2.0 means that a may assume any value within the range from 0.0 to 2.0.

The coating composition according to the invention can include components (A) and (B), in the range of from 60 to 96 % by weight of component (A) and 4 to 40 % by weight of the component (B).

The filler and/or aggregate in said coating composition are coarse particles which are used to impart anti-skid properties to coated substrate therewith. The amount of aggregate suitable for use in the anti-skid coating composition ranges 20 to 90 % by weight. The concentration depends on the desired extent of anti-skid properties. The filler and/or aggregate are preferably ground to particle sizes between 40 μm and 1.5 millimeters. In a preferred embodiment said filler and/or aggregate has a size ranging from 100 μm to 400 μm, more preferably from 125 μm to 200 μm.

Example of suitable aggregate for use in the present coating composition can be selected from the group comprising quartz, glass, boron powder, silicon carbide, tungsten carbide powder, glass, corundum particles, metal grains, particles of pumice stone, slag, siliceous sand, particles of plastic materials, boron nitride, etc. The filler increases the internal cohesion of the coat and it contributes to imparting a high resistance to impacts and abrasion to this coat. Preferably, the filler comprises abrasion resistant materials. Suitable abrasion resistant materials include magnesium oxide, silicon dioxide, aluminum oxide, aluminum/iron oxide, amorphous glass, garnet, and nepheline syenite (anhydrous sodium potassium aluminum silicate). Said filler may also be a rough-surfaced lamellar mineral filler, such as a mixture of chlorite (hydrosilicate of magnesium, potassium and aluminum), mica and quartz. Other examples of suitable filler include micas, barium sulphate, talc, wollastonite, kaolin, ground limestone, gypsum, clays, silica, perlite and calcite etc. Polymeric fillers may also be used, such as for example, thermosetting rubbers (such as neoprenes), rubber particle fillers (Kraton® Rubber particles, chloroprenes, EPDM, urethanes, etc.), plasticizers; hydrocarbon resins (such as rosin, low molecular weight polyethylenes and polypropylenes; and coal tar (Modpox®). Suitable aggregate type and size that provides slip resistance can be selected according to traffic, chemical expo-sure and cleanability requirements. For example, aluminum oxide and garnet aggregates can be chosen for hardness and corrosion resistance. Steel aggregates may be chosen for good impact resistance. Polyolefin beads may be used to produce a softer aggregate and excellent cleanability and sanitation.

In an embodiment of the present invention, the filler and/or aggregate can be chosen from the group comprising aluminum oxide, aluminum/iron oxide, silicon dioxide, magnesium oxide or a combination thereof, and the like.

In another embodiment of the present invention, component (A) comprises a polysiloxane of formula (1) of the following stoichiometric formula

$$R^1_a R^2_b (R^{10}O)_c SiO_{\frac{(4-a-b-c)}{2}},$$

wherein each $R^{10}$ is independently selected from hydrogen, alkyl, aryl or $-R^3-(X)_z$, and $R^1$, $R^2$, $R^3$, X and z have the same meaning as that defined above, a and b are each a real number from 0.0 to 2.0, more in particular from 0.1 to

2.0, c is a real number from 0.1 to 1.0, b/a is ranging from 0.2 to 2.0 and a+b+c is lower than 4, and wherein 0 to 90 % of -O-$R^{10}$ is hydroxy, alkoxy or aryloxy.

In a preferred embodiment, the bivalent radical $R^3$ is selected from the group comprising alkylene, alkenylene, arylene, aralkylene, aralkenylene, aryloxy, aminoalkylene, -C(=O)-,-C(=S)-, -S$(=O)_2$-, alkylene-C(=O)-, alkylene-C (=S)-, alkylene-S$(=O)_2$-, -N$R^4$-C(=O)-, -N$R^4$-alkylene-C(=O)-, or -N$R^4$-S$(=O)_2$ whereby either the C(=O) group or the S$(=O)_2$ group is attached to the N$R^4$ moiety, optionally substituted by alkyl, aryl, cycloalkyl, halogen, hydroxy, alkoxy, thioalkyl, amino, amino derivatives, amido, amidoxy, nitro, cyano, keto, acyl derivatives, acyloxy derivatives, carboxy, ester, ether, esteroxy, sulfonic acid, sulfonyl derivatives, sulfinyl derivatives, heterocycle, alkenyl or alkynyl, wherein $R^4$ is hydrogen, alkyl, alkenyl, aralkyl, cycloalkyl, cycloalkylalkyl, aryl, heterocycle or heterocycloalkyl; or the radical -O-$R^3$-$(X)_z$ can be selected from the group comprising hydroxy, alkoxy, aryloxy or radical of formula (I), (II), (III), (IV), (V), (VI), (VII), (VIII), wherein $R^6$ is H or 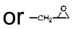 and m is an integer from 0 to 10.

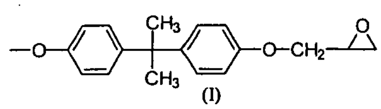
(I)

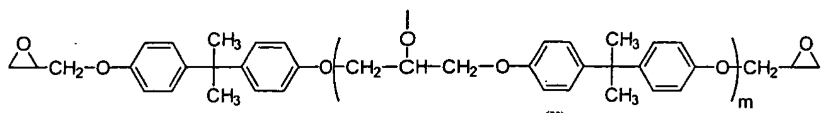
(II)

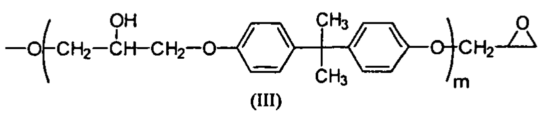
(III)

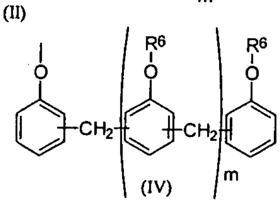
(IV)

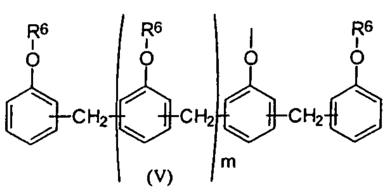
(V)

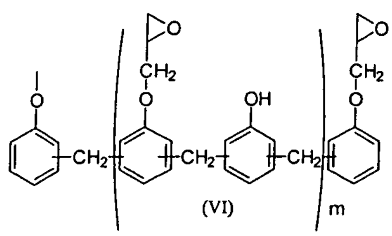
(VI)

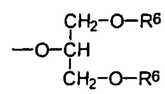
(VII)

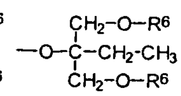
(VIII)

In another embodiment of the present invention, component (A) comprises a polysiloxane of formula (1) wherein said reactive functional group X for reacting with amine radicals can be selected from the group comprising unsaturated ester, imidyl, phthalimidyl, cyclocarbonate, acetylalkanoate, acetylalkylamide, epoxy, cyclic anhydride, carbamate, isocyanate, vinyl.

Non-limiting examples of reactive functional group X include acrylate, methacrylate, maleimide, succinimide, glycerolcarbonate, acetylacetanoate, epoxy, (cyclic) succinic anhydride, phthalic anhydride, isocyanate, and vinyl.

More in particular the functional group -$R^3(X)_z$ can be selected from the group comprising acrylate, methacrylate, maleimide, succinimide, glycerolcarbonate, acetylacetanoate, cyclic succinic anhydride and phthalic anhydride.

Non-limiting examples of suitable polysiloxane for use in component (A) may have the following formulas (a), (b), (c), (d), (e), (f), (g), (h), (i), (j), (k), (l),

(a) 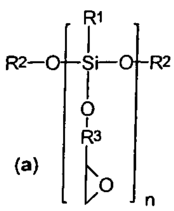 (b) 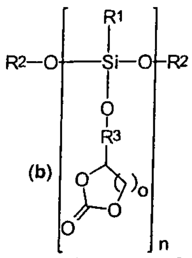 (c) 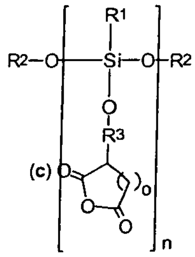 (d) 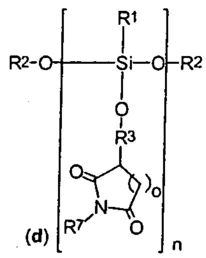 (e) 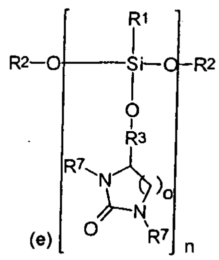

(f) 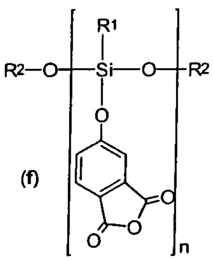 (g) 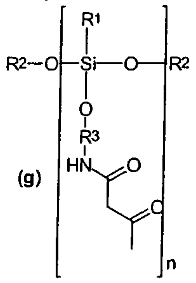 (h) 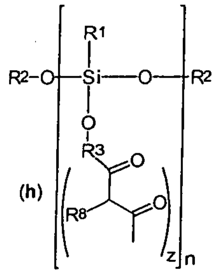 (i) 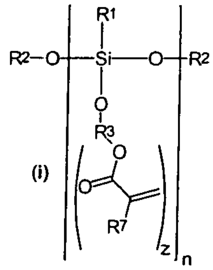 (j) 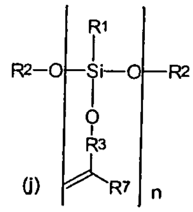

(k) 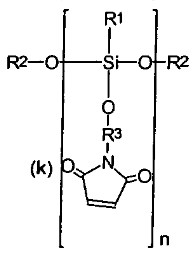 (l) 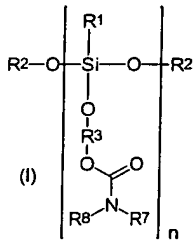

wherein $R^1$, $R^2$, $R^3$ and n have the same meaning as that defined above, $R^7$, $R^8$ represent each independently a hydrogen, alkyl, alkenyl, aralkyl, cycloalkyl, cycloalkylalkyl, aryl, heterocycle or heterocycloalkyl, z is 1, 2 or 3 and o is 1, 2 or 3. It is to be understood that formula (a), (b), (c), (d), (e), (f), (g), (h), (i), (j), (k), (l) are illustrative only, and that the polysiloxane for use in the coating composition according to the invention as illustrated above may contain from 0 to 90% of alkoxy, aryloxy or hydroxy radicals.

As used herein, the term "alkyl", alone or in combination, means straight and branched chained saturated hydrocarbon radicals containing from 1 to 10 carbon atoms, preferably from 1 to 8 carbon atoms, more preferably 1 to 6 carbon atoms. Examples of such radicals include methyl, ethyl, n-propyl, isopropyl n-butyl, isobutyl, sec-butyl, tert-butyl, 2-methylbutyl, pentyl, iso-amyl, hexyl, 3-methylpentyl, octyl and the like.

The term "alkylene", alone or in combination, defines bivalent straight and branched chained saturated hydrocarbon radicals containing from 1 to 10 carbon atoms, preferably from 1 to 8 carbon atoms, more preferably 1 to 6 carbon atoms such as, for example, methylene, ethylene, propylene, butylene, pentylene, hexylene and the like.

The term "alkynyl", alone or in combination, defines straight and branched chained hydrocarbon radicals having from 2 to 10 carbon atoms containing at least one triple bond, more preferably from 2 to 6 carbon atoms. Examples of alkynyl radicals include ethynyl, propynyl, (propargyl), butane, pentynyl, hexynyl and the like.

The term "aminoalkylene" means a bivalent alkylene amine radical, wherein the term "alkylene" is defined as above. Examples of aminoalkylene radicals include aminomethylene ($-CH_2NH-$), aminoethylene ($-CH_2CH_2NH-$), aminopropylene, aminoisopropylene, aminobutylene, aminoisobutylene, aminohexylene and the like.

The term "alkenyl", alone or in combination, defines straight and branched chained hydrocarbon radicals containing from 2 to 18 carbon atoms, preferably from 2 to 8 carbon atoms, more preferably 2 to 6 carbon atoms containing at least one double bond such as, for example, ethenyl, propenyl, butenyl, pentenyl, hexenyl and the like.

The term "alkenylene", alone or in combination, defines bivalent straight and branched chained hydrocarbon radicals containing from 2 to 18 carbon atoms, preferably from 2 to 8 carbon atoms, more preferably 2 to 6 carbon atoms containing at least one double bond such as, for example, ethenylene, propenylene, butenylene, pentenylene, hexenylene and the like.

The term "alkoxy" or "alkyloxy", alone or in combination, means alkyl ether radical wherein the term alkyl is as defined above. Examples of suitable alkyl ether radicals include methoxy, ethoxy, n-propoxy, isopropoxy, n-butoxy, iso-butoxy, sec-butoxy, tert-butoxy, hexanoxy and the like.

The term "aralkyl" alone or in combination, means an alkyl as defined herein, wherein an alkyl hydrogen atom is replaced by an aryl as defined herein. Examples of aralkyl radicals include benzyl, phenethyl, dibenzylmethyl, methylphenylmethyl, 3-(2-naphthyl)-butyl, and the like.

The term "aralkylene" as used herein, relates to a group of the formula alkylene-arylene in which alkylene is as defined above. Examples of aralkylene radicals include benzylene, phenethylene and the like.

The term "aryl" alone or in combination, is meant to include phenyl and naphtyl which both may be optionally substituted with one or more substituents independently selected from alkyl, alkoxy, halogen, hydroxy, amino, nitro, cyano, haloalkyl, carboxy, alkoxycarbonyl, cycloalkyl, heterocycle, amido, optionally mono- or disubstituted aminocarbonyl, methylthio, methylsulfonyl, and phenyl optionally substituted with one or more substituents selected from alkyl, alkyloxy, halogen, hydroxy, optionally mono- or disubstituted amino, nitro, cyano, haloalkyl, carboxyl, alkoxycarbonyl, cycloalkyl, heterocycle, optionally mono- or disubstituted aminocarbonyl, methylthio and methylsulfonyl; whereby the optional substituents on any amino function are independently selected from alkyl, alkyloxy, heterocycle, heterocycloalkyl, heterocyclooxy, heterocyclooxyakyl, phenyl, phenyloxy, phenyloxyalkyl, phenylalkyl, alkyloxycarbonylamino, amino, and aminoalkyl whereby each of the amino groups may optionally be mono- or where possible di-substituted with alkyl. Examples of aryl includes phenyl, p-tolyl, 4-methoxyphenyl, 4-(tert-butoxy)phenyl, 3-methyl-4-methoxyphenyl, 4-fluorophenyl, 4-chlorophenyl, 3-nitrophenyl, 3-aminophenyl, 3-acetamidophenyl, 4-acetamidophenyl, 2-methyl-3-acetamidophenyl, 2-methyl-3-aminophenyl, 3-methyl-4-aminophenyl, 2-amino-3-methylphenyl, 2,4-dimethyl-3-aminophenyl, 4-hydroxyphenyl, 3-methyl-4-hydroxyphenyl, 1-naphthyl, 2-naphthyl, 3-amino-1-naphthyl, 2-methyl-3-amino-1-naphthyl, 6-amino-2-naphthyl, 4,6-dimethoxy-2-naphthyl and the like.

The term "arylene" as used herein, includes a bivalent organic radical derived from an aromatic hydrocarbon by removal of two hydrogens, such as phenylene.

The term "cycloalkyl" alone or in combination, means a saturated or partially saturated monocyclic, bicyclic or polycyclic alkyl radical wherein each cyclic moiety contains from 3 to 8 carbon atoms, more preferably from 3 to 7 carbon atoms. Examples of monocyclic cycloalkyl radicals include cyclopropyl, cyclobutyl, cyclopentyl, cyclohexyl, cycloheptyl, cyclodecyl and the like. Examples of polycyclic cycloalkyl radicals include decahydronaphthyl, bicyclo [5.4.0] undecyl, adamantyl, and the like.

The term "cycloalkylalkyl" means an alkyl radical as defined herein, in which at least one hydrogen atom on the alkyl radical is replaced by a cycloalkyl radical as defined herein. Examples of such cycloalkylalkyl radicals include cyclopropylmethyl, cyclobutylmethyl, cyclopentylmethyl, cyclohexylmethyl, 1-cyclopentylethyl, 1-cyclohexylethyl, 2-cyclopentylethyl, 2-cyclohexylethyl, cyclobutylpropyl, cyclopentylpropyl, 3-cyclopentylbutyl, cyclohexylbutyl and the like.

As used herein, the term "halogen" as a group or part of a group is generic for fluoro, chloro, bromo or iodo.

The term "heterocycle" alone or in combination, is defined as a saturated or partially unsaturated or aromatic monocyclic, bicyclic or polycyclic heterocycle having preferably 3 to 12 ring members, more preferably 5 to 10 ring members and more preferably 5 to 8 ring members, which contains one or more heteroatom ring members selected from nitrogen, oxygen or sulfur and which is optionally substituted on one or more carbon atoms by alkyl, alkyloxy, halogen, hydroxy, oxo, optionally mono- or disubstituted amino, nitro, cyano, haloalkyl, carboxyl, alkoxycarbonyl, cycloalkyl, optionally mono- or disubstituted aminocarbonyl, methylthio, methylsulfonyl, aryl and a saturated or partially unsaturated or aromatic monocyclic, bicyclic or tricyclic heterocycle having 3 to 12 ring members which contains one or more heteroatom ring members selected from nitrogen, oxygen or sulfur and whereby the optional substituents on any amino function are independently selected from alkyl, alkyloxy, heterocycle, heterocycloalkyl, heterocyclo-oxy, heterocyclo-oxyalkyl, aryl, aryloxy, aryloxyalkyl, aralkyl, alkyloxycarbonylamino, amino and aminoalkyl whereby each of the amino groups may optionally be mono- or where possible di-substituted with alkyl.

The term "heterocycloalkyl" means alkyl as defined herein, wherein an alkyl hydrogen atom is replaced by a heterocycle as defined herein. Examples of heterocycloalkyl radicals include 2-pyridylmethyl, 3- (4-thiazolyl)-propyl, and the like.

The term "thioalkyl" means an alkyl thioether radical, wherein the term "alkyl" is defined as above. Examples of thioalkyl radicals include methylthio ($SCH_3$), ethylthio ($SCH_2CH_3$), n-propylthio, isopropylthio, n-butylthio, isobutylthio, sec-butylthio, tert-butylthio, n-hexylthio, and the like.

Examples of other suitable polysiloxane of formula (1) include but are not limited to the epoxy-functional polysiloxanes described in JP 2000-319582, and the organo-functional polysiloxanes described in European patent application No. 02447082.5, hereby incorporated by reference.

Polysiloxane of formula (1) suitable for use in the present invention may be prepared according to the following method. Said method comprises the step of reacting a polysiloxane of formula (2) with a compound of formula (3), optionally in the presence of a suitable catalyst,

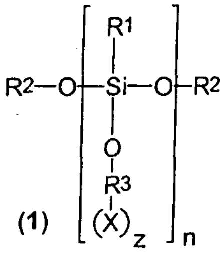
(1)
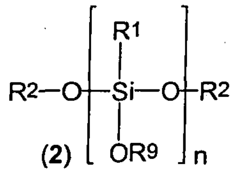
(2)
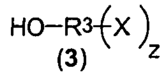
(3)

wherein each $R^1$ is independently selected from the group comprising alkyl and aryl radicals, $R^2$ and $R^9$ which may be identical or different, are selected each independently from the group comprising hydrogen, alkyl and aryl radicals, n is selected so that the molecular weight for the polysiloxane is in the range of from 400 to 10,000, $R^3$ is a bivalent radical or -O-$R^3$-$(X)_z$ in compound of formula (1) is hydroxy, alkoxy or aryloxy, z is 1, 2 or 3 and X is a reactive functional group for reacting with amine radicals and wherein 0 to 90 % of -O-$R^3$-$(X)_z$ in compound of formula (1) is hydroxy, alkoxy or aryloxy.

According to an embodiment, the polysiloxane of formula (2) has the following stoichiometric formula

$$R^1_aR^2_b(R^9O)_cSiO_{\frac{(4-a-b-c)}{2}},$$

wherein $R^1$, $R^2$, $R^9$ have the same meaning as that defined above, a and b are each a real number from 0.0 to 2.0, more in particular from 0.1 to 2.0, c is a real number from 0.1 to 1.0, b/a is ranging from 0.2 to 2.0 and a+b+c is lower than 4.

Suitable polysiloxane of formula (2) may have a molecular weight ranging from 500 to 6000 and an alkoxy content ranging from 10 to 50 %.

Examples of suitable polysiloxane of formula (2) include but are not limited to the alkoxy- and silanol-functional polysiloxanes. Suitable alkoxy-functional polysiloxanes include, but are not limited to: DC-3074 and DC-3037 from Dow Corning; Silres SY-550, and SY-231 from Wacker Silicone; and Rhodorsil Resin 10369 A, Rhodorsil 48V750, 48V3500 from Rhodia Silicones; and SF1147 from General Electrics. Suitable silanol-functional polysiloxanes include, but are not limited to, Silres SY 300, Silres SY 440, Silres SY 530, Silres MK and REN 168 from Wacker Silicone, Dow Corning's DC-840, DC233 and DC-431 HS silicone resins and DC-Z-6018 intermediate and Rhodia Silicones' Rhodorsil Resin 6407 and 6482 X.

In order to obtain said polysiloxane of formula (1), polysiloxane starting material of formula (2) may be reacted with any suitable polyfunctional compound of formula (3) comprising at least one hydroxyl and at least one functional group X susceptible to react with amine group. Said reaction may be partial or total, and the polysiloxane obtained at the end of the reaction may contain from 0 to 90 % of alkoxy, aryloxy or hydroxy radicals.

For example, suitable compounds of formula (3) include but are not limited to compounds of formulas (a'), (b'), (c'), (d'), (e'), (f), (g'), (h'), (i'), (j'), (k'), (l'), (l'), (II'), (III'), (IV'), (V'), (VI'), (VII'), (VIII'), wherein $R^3$ has the same meaning as that defined above, wherein $R^6$ is H or 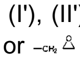, m is an integer of 0 to 10, $R^7$, $R^8$ represent each independently a hydrogen, alkyl, alkenyl, aralkyl, cycloalkyl, cycloalkylalkyl, aryl, heterocycle or heterocycloalkyl, z is 1, 2 or 3 and o is 1, 2 or 3.

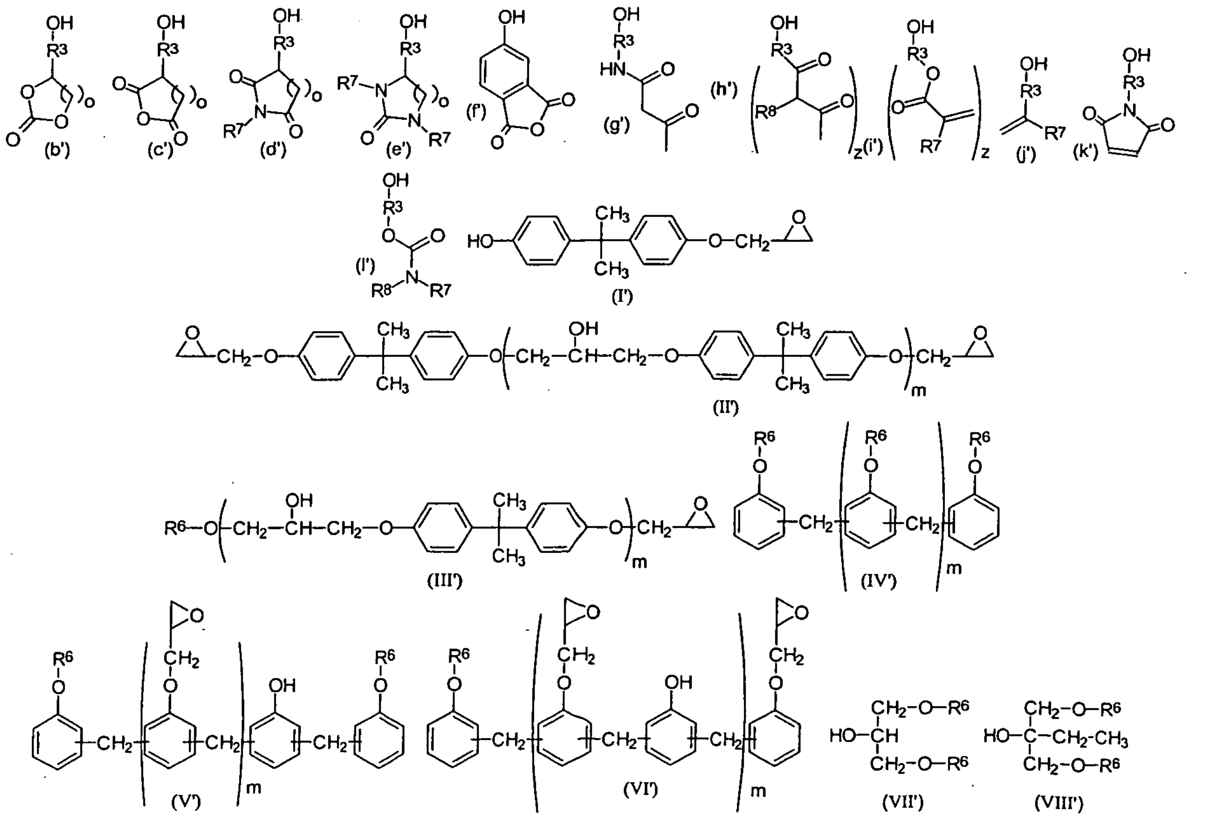

(b') (c') (d') (e') (f') (g') (h') (i') (j') (k') (l') (I') (II') (III') (IV') (V') (VI') (VII') (VIII')

For example, compound of formula (3) may be any suitable epoxy resin. Said suitable epoxy resins for reaction with polysiloxane of formula (2) may be produced by the attachment of an epoxide group to both ends of a paraffinic hydrocarbon chain (for example, diepoxides derived from butanediol) or of a polyether chain, such as α-ω-diepoxy polypropylene glycol. More exotic diepoxy resins suitable for said reaction include but are not limited to vinylcyclo hexene dioxide, 3,4-epoxycyclohexylmethyl 3,4-epoxycyclohexanemono carboxylate, 3-(3,4-epoxycyclohexyl)-8,9-epoxy-2,4-dioxaspiro-[5.5]undecane, bis(2,3-epoxycyclopentyl) ether, bis(3,4-epoxy-6-methylcyclohexyl) adipate and resorcinol diglycidyl ether. Other suitable epoxy resins can contain more than two epoxide functional groups per molecule, such as epoxidized soya oils, polyglycidyl ethers of phenolic resins of the novolak type, p-aminophenoltriglycidyl ether or 1,1,2,2-tetra(p-hydroxyphenyl)ethane tetraglycidyl ether. Another class of epoxy resins suitable for reaction with the polysiloxane of formula (2) comprises the epoxy polyethers obtained by reacting an epihalohydrin (such as epichlorohydrin or epibromohydrin) with a polyphenol in the presence of an alkali. Suitable polyphenols include resorcinol, catechol, hydroquinone, bis(4-hydroxyphenyl)-2,2-propane, i.e. bisphenol A; bis(4-hydroxyphenyl)-1,1-isobutane, 4,4-dihydroxybenzophenone; bis(4-hydroxyphenyl-1,1-ethane; bis(2-hydroxynaphenyl)-methane; and 1,5-hydroxynaphthalene. One very common polyepoxide is a polyglycidyl ether of a polyphenol, such as bisphenol A. Another class of epoxy resin suitable for the reaction comprises the hydrogenated epoxy resin based on bisphenol A such as Eponex 1510 from Shell. Other examples of suitable epoxy resins are the polyglycidyl ethers of polyhydric alcohols. These compounds may be derived from such polyhydric alcohols as ethylene glycol, diethylene glycol, triethylene glycol, 1,2- propylene glycol, 1,4-butylene glycol, 1,5-pentanediol, 1,2,6-hexane- triol, glycerol, trimethylolpropane, and bis(4-hydroxycyclohexyl)-2,2- propane. A detailed list of suitable epoxide compounds which can be used for the synthesis the polysiloxane for use in the composition according to the invention can be found in the handbooks A. M. Paquin, "Epoxidverbindungen und Harze" (Epoxide Compounds and Resins), Springer Verlag, Berlin 1958, Chapter IV and H. Lee and K. Neville, "Handbook of Epoxy Resins" MC Graw Hill Book Company, New York 1982 Reissue, as well as C. A. May, "Epoxy Resins-Chemistry and Technology", Marcel Dekker, Inc. New York and Basle, 1988.

According to another embodiment, more suitable compounds of formula (3) may be selected form the group comprising glycerin carbonate, hydroxyethylacrylate, hydroxyethylmethacrylate, Epikote 834, Epikote 1001, epoxidized phenol, formaldehyde resins, bakelite LA647, glycidyl ethers of polyol such as trimethylpropane (TMP) and neopentyl glycol (NPG), glycerol and the like, such as araldite T or diglycidyl ether of glycerol.

The presence of a catalyst in said method for the preparation of the polysiloxane of formula (1) is optional.

The catalyst may, for example, be an inorganic acid such as hydrochloric acid, nitric acid, sulfuric acid or phosphoric acid, an organic acid such as acetic acid, paratoluenesulfonic acid, benzoic acid, phthalic acid, maleic acid, formic acid or oxalic acid, an alkaline catalyst such as potassium hydroxide, sodium hydroxide, calcium hydroxide or ammonia, an organic metal, a metal alkoxide, an organic tin compound such as dibutyltin dilaurate (DBTL), dibutyltin dioctoate or dibutyltin diacetate, or a boron compound such as boron butoxide or boric acid. Illustrative examples of metal alkoxide include aluminum triethoxide, aluminum triisopropoxide, aluminum tributoxide, aluminum tri-sec-butoxide, aluminum diisopropoxy-sec-butoxide, aluminum diisopropoxyacetylacetonate, aluminum di-sec-butoxyacetylacetonate, aluminum diisopropoxyethylacetoacetate, aluminum di-sec-butoxyethylacetoacetate, aluminum trisacetylacetonate, aluminum trisethylacetoacetate, aluminum acetylacetonate bisethylacetoacetate, titanium tetraethoxide, titanium tetraisopropoxide, titanium (IV) butoxide, titanium tetrabutoxide, titanium (IV) n-butoxide, titanium diisopropoxybisacetyl acetonate, titanium diisopropoxybisethyl acetoacetate, titanium tetra-2-ethylhexyloxide, titanium diisopropoxybis(2-ethyl-1,3-hexanediolate), titanium dibutoxybis(triethanolaminate), zirconium tetrabutoxide, zirconium tetraisopropoxide, zirconium tetramethoxide, zirconium tributoxide monoacetylacetonate, zirconium dibutoxide bisacetylacetonate, zirconium butoxide trisacetylacetonate, zirconium tetraacetylacetonate, zirconium tributoxide monoethylacetoacetate, zirconium dibutoxide bisethylacetoacetate, zirconium butoxide trisethylacetoacetate and zirconium tetraethylacetoacetate. In addition to these compounds, cyclic 1,3,5-triisopropoxycyclotrialuminoxane and the like can also be used. Among these compounds, aluminum triisopropoxide, aluminum tri-sec-butoxide, aluminum diisopropoxyethylacetoacetate, aluminum di-sec-butoxyethylacetoacetate, aluminum trisacetylacetonate, titanium tetraisopropoxide, titanium tetrabutoxide and zirconium tetrabutoxide are used preferably, when necessary.

The present coating composition comprises a component (B), comprising one or more amino-hardener and optionally one or more catalyst.

Examples of suitable amino-hardener for use in the present composition include but are not limited to aliphatic, cycloaliphatic amine, aromatic, araliphatic amines, imidazoline group-containing polyaminoamides based on mono or polybasic acids, as well as adducts thereof. These compounds are part of the general state of the art and are described, inter alia, in Lee & Neville, "Handbook of Epoxy Resins", MC Graw Hill Book Company, 1987, chapter 6-1 to 10-19.

More in particular, useful amino-hardener include polyamines distinguished by the fact that they carry at least two primary amino groups, in each case bonded to an aliphatic carbon atom. It can also contain further secondary or tertiary amino groups. Suitable polyamines include polyaminoamides (from aliphatic diamines and aliphatic or aromatic dicarboxylic acids) and polyiminoalkylene-diamines and polyoxyethylene-polyamines, polyoxypropylene-polyamines and mixed polyoxyethylene/ polyoxypropylene-polyamines or amine adducts, such as amine-epoxy resin adducts (see C.H. Hare in "Protective Coatings", chap.15, pp 211-212, tpc Books, 1994). Said amines may contain 2 to 40 carbon atoms. For examples, the amines can be selected from polyoxyalkylene-polyamines and polyiminoalkylene-polyamines having 2 to 4 carbon atoms in the alkylene group, and have a number-average degree of polymerization of 2 to 100, other examples of amines can be linear, branched or cyclic aliphatic primary diaminoalkanes having 2 to 40 carbon atoms. In addition, said amines can be araliphatic amines having at least two primary amino groups, each of which are bonded to an aliphatic carbon atom. In a preferred embodiment, the amino hardener is an epoxy-amine adduct.

Examples of other suitable polyamines suitable for the present coating composition include: 1,2-diaminoethane, 1,2-diaminopropane, 1,3-diaminopropane, 1,4-diaminobutane and higher homologues, as well as 2-methyl-1,5-diaminopentane, 1,3-diaminopentane, 2,2,4-trimethyl-1,6-diaminohexane and 2,4,4-trimethyl-1,6-diaminohexane as well as industrial mixtures thereof, 1-amino-3-aminomethyl-3,5,5-trimethylcyclohexane, 2,2-dimethyl-1,3-diaminopropane, 1,3-bis(aminomethyl)cyclohexane, 1,2-diaminocyclohexane, 1,3-bis(aminomethyl)benzene, bis(4-aminocyclohexyl)methane, bis(4-amino-3-methylcyclohexyl)methane, 3-azapentane-1,5-diamine, 4-azaheptane-1,7-diamine, 3,6-diazaoctane-1,8-diamine, benzyloxypropylaminepropylamine, diethylamino-propylamine, 3(4),8(9)-bis(aminomethyl)tricyclo-[5.2.1.0$^{2,6}$]decane, 3-methyl-3-azapentane-1,5-diamine, 3,6-dioxaoctane-1,8-diamine, 3,6,9-trioxaundecane-1,11-diamine, 4,7-dioxadecane-1,10-diamine, 4, 7,10-trioxatridecane-1,13-diamine, 4-aminomethyl-1,8-diaminooctane, 2-butyl-2-ethyl-1,5-diaminopentane, 3-(aminomethyl)benzylamine (MXDA), 5-(aminomethyl)bicyclo[[2.2.1]hept-2-yl]methylamine (NBDA), polyamino imidazoline (Versamid 140), as well as diethylenetriamine (DETA), triethylenetetramine (TETA, which is a mixture of several polyamines), pentaethylenetetramine, dimethyldipropylenetriamine, dimethylaminopropyl-aminopropylamine (DMAPAPA), N-2-(aminoethyl)piperazine (N-AEP), N-(3-aminopropyl)piperazine, norbornane diamine, epilink MX, isophoronediamine (IPD), diaminodicyclohexylmethane (PACM), dimethyldiaminodicyclohexyl methane (Laromin C260), tetramethylhexamethylenediamine (TMD), bis aminomethyl-dicyclopentadiene (tricyclodecyldiamine, TCD), diaminocyclohexane, diethylaminopropylamine (DEAPA), and the like. In addition, mixtures from several amines are possible.

Suitable polyamine could be polyoxyalkylenepolyamine hardener, such as for example, polyoxyalkylene polyamine hardener of formula (4)

$$\left[H_2N-(R^aCHCH_2O)_x\right]_y Q$$

(4)

wherein Q is the residue of an active hydrogen-containing polyvalent compound; each $R^a$ is independently hydrogen or alkyl; x is at least 1; and y is at least 2, provided that the average value for x is less than 10 for the low molecular weight polyoxyalkylene polyamine used. The variables in said formula have the following meanings: Q is the residue of an active hydrogen-containing polyvalent compound used as an initiator. The valence of Q is given by y, wherein y is at least 2, preferably from 2 to 8, and most preferably 2 to 3. Each $R^a$ is independently hydrogen or alkyl, such as methyl or ethyl. The $R^a$ groups are preferably hydrogen and/or methyl, including mixtures. The average number of oxyalkylene repeating units per amine group, given by x, is at least 1, preferably from 1 to 100, and most preferably from 1.5 to 7. Preferably, Q is residual alkyl, alkenyl, alkynyl, most preferably $C_{1-18}$ alkyl. Typical oxyalkylene repeating units include oxyethylene, oxypropylene, oxybutylene, and so on, including mixtures thereof. When two or more oxyalkylenes are used, they may be present in any form, such as randomly or in blocks.

Examples of suitable polyoxyalkylene polyamine are polyoxyalkylenetriamines and polyoxyalkylenediamine. Examples of suitable polyoxyalkylenepolyamine are polyoxypropylenetriamine and polyoxypropylenediamine. Non-limiting examples of polyoxyalkylene polyamines include JEFFAMINE® polyoxyalkylene amines from HUNTSMAN, such as diamines D-230, D-400, D-2000 and D-4000, and triamines T-403, T-3000 and T-5000. Suitable polyiminoalkylenepolyamines are also available, for example, under the trade name ®Polymin. In addition, mixtures from several amines are possible. Several suitable polyoxyalkylene polyamines and their preparations are described in US Patent Nos. 5,391,826 and 4,766,245 hereby incorporated by reference.

Catalyst can be optionally added to component (B). Examples of suitable catalysts for said coating can be the same as that described above for the synthesis of the polysiloxane for use in the component (A). Up to 10 % by weight catalyst may be added to the coating composition, or may be added as an entirely separate component, to speed drying and curing of the coating composition. As described above useful catalysts include metal driers well known in the paint industry, e.g. zinc, manganese, zirconium, titanium, cobalt, iron, lead and tin containing driers. Suitable catalysts include organotin catalysts. For example, dibutyl tin dilaurate, dibutyl tin diacetate, organotitanates, sodium acetate, and aliphatic secondary or tertiary polyamines including propylamine, ethylamino ethanol, triethanolamine, triethylamine, and methyl diethanol amine may be used alone or in combination.

Other suitable catalysts include acids such as organic acids, inorganic acids, organic sulfonic acids, esters of sulfuric acid and superacids. Organic acids include acetic acid, formic acid and the like. Inorganic acids include sulfuric acid, hydrochloric acid, perchloric acid, nitric acid, phosphoric acid, and the like. Organic sulfonic acids include both aromatic and aliphatic sulfonic acids. Representative sulfonic acids that are commercially available include methanesulfonic, trifluoromethanesulfonic, benzenesulfonic, dodecylbenzenesulfonic, dodecyldiphenyloxide sulfonic, 5-methyl-1-naphthylenesulfonic, and p-toluenesulfonic acid, sulfonated polystyrene, and the sulfonates derived from polytetrafluoroethylenes. Superacids suitable as catalysts are described in G. A. Olah, G. K. S. Prakash, and J. Sommer, Superacids, John Wiley & Sons: New York, 1985. Useful superacids include perchloric, fluorosulfuric, trifluoromethanesulfonic, and perfluoroalkylsulfonic acids. They also include Lewis superacids such as $SbF_5$, $TaF_5$, $NbF_5$, $PF_5$, and $BF_3$. Superacids also include hydrogen fluoride in combination with fluorinated Lewis acids such as $SbF_5$, $TaF_5$, $NbF_5$, $PF_5$, and $BF_3$. They also include oxygenated Bronsted acids such as sulfuric, fluorosulfuric, trifluoromethanesulfonic, and perfluoroalkylsulfonic acid in combination with Lewis acids such as $SbF_5$, $TaF_5$, $NbF_5$, $PF_5$, and $BF_3$. Other examples of suitable catalysts include nitrate of a polyvalent metal ion such as calcium nitrate, magnesium nitrate, aluminum nitrate, zinc nitrate, or strontium nitrate.

If appropriate, the coating composition according to the invention may additionally comprise a diluent which is inert. Examples of suitable diluents include aliphatic linear, branched or cyclic ethers having 4 to 20 carbon atoms and mixed aliphatic-aromatic ethers having 7 to 20 carbon atoms, such as dibenzyl ether, tetrahydrofuran, 1,2-dimethoxyethane or methoxybenzene; aliphatic linear, branched or cyclic or mixed aliphatic-aromatic ketones having 4 to 20 carbon atoms, such as butanone, cyclohexanone, methyl isobutyl ketone or acetophenone; aliphatic linear, branched or cyclic or mixed aromatic-aliphatic alcohols having 4 to 20 carbon atoms, such as methanol, ethanol, butanol, 2-propanol, isobutanol, isopropanol. benzyl alcohol, methoxypropanol or furfuryl alcohol; aliphatic linear, branched or cyclic or mixed aromatic-aliphatic esters such as methoxypropylacetate or DBE (dibasic esters from Dupont, mixture of dimethyl adipate, succinate and glutarate); aliphatic linear, branched or cyclic or mixed aromatic-aliphatic hydrocarbons such as toluene, xylene, heptane and mixtures of aliphatic and aromatic hydrocarbons having a boiling range above 100 °C. under normal pressure, as well as low-viscosity coumarone-indene resins or xylene-formaldehyde resins. Aliphatic alcohols having one phenyl radical, such as benzyl alcohol, 1-phenoxypropane-2,3-diol, 3-phenyl-1-propanol, 2-phenoxy-1-ethanol, 1-phenoxy-2-propanol, 2-phenoxy-1-propanol, 2-phenylethanol, 1-phenyl-1-ethanol or 2-phenyl-1-propanol, are preferred. The diluents can be employed individually or as a mixture, and in particular in a amount

ranging from 1 to 35 % by weight, for example in an amount ranging from 5 to 25% by weight and for example in an amount ranging from 10 to 30 %.

The coating composition of the present invention may also contain auxiliaries or additives such as abrasion resistance improvers, absorbents, rheological modifiers, plasticizers, antifoaming agents, antifouling agents, thixotropic agents, pigments, fillers, aggregates, extenders, reinforcing agents, flow control agents, catalysts, pigment pastes, mineral oils, wetting agents, adhesion promoters, thickening agents, flame-retarding agents, antioxidants, elastomers, antisettling agents, diluents, UV light stabilizers, air release agents, solvents, dispersing aids, and mixtures thereof, additional hardeners and additional curable compounds, depending on the application. Examples of suitable additives that may be added to the coating composition may be found in 2002 Additives Guide, Paint & Coatings Magazine, April 2002, 26-80, hereby incorporated by reference.

Suitable pigments may be selected from organic and inorganic color pigments which may include titanium dioxide, carbon black, lampblack, zinc oxide, natural and synthetic red, yellow, brown and black iron oxides, toluidine and benzidine yellow, phthalocyanine blue and green, and carbazole violet, and extender pigments including ground and crystalline silica, barium sulfate, magnesium silicate, calcium silicate, mica, micaceous iron oxide, calcium carbonate, zinc powder, aluminum and aluminum silicate, aluminum paste, gypsum, feldspar and the like. The amount of pigment that is used to form the coating composition is understood to vary, depending on the particular composition application, and can be zero when a clear composition is desired. For example, a coating composition may comprise up to 50 % by weight of pigment. Depending on the particular end use, a preferred polymer composition may comprise approximately 0 to 10 % by weight of pigment.

Metallic or other conductive particles may be included in said coating composition in order to improve the anti-spark properties of said coatings. Examples of suitable metallic or conductive particles include but are not limited to aluminum and/or carbon black.

While a particular combination of components has been discussed herein, it will be understood by those skilled in the art that various combinations of materials, ingredients, and additives can be used to produce a suitable coating composition according to the invention.

The present invention further relates to a method for the preparation of a fully cured coating composition according to the invention, comprising the step of forming a base component (A) by combining as a binder a polysiloxane of formula (1) in a amount ranging from 10 to 60 % by weight, with one or more filler and/or an aggregate in an amount ranging from 40 to 90 % by weight, optionally one or more pigment, optionally one or more additive, and curing the base component (A) by adding thereto a component (B) comprising one or more amino hardener, and optionally one or more catalyst to facilitate the curing.

Curing of said coating composition can proceed very rapidly, and in general can take place at a temperature within the range of from -10 °C to +50 °C, in particular from 0 °C to 40 °C, more in particular from 3 to 20 °C.

The present invention further relates to a multicoat system comprising one or more priming coat and one or more topcoat, wherein said priming and topcoats comprise the coating composition according to the invention.

The coating composition can be uniformly applied as a coating to the surface to be coated by spraying, brushing, rolling, dipping or other equivalent means. The amount of coating applied, referred to as the "spread", can vary from about 140 to about 1200 $g/m^2$ of the structural surface when applied as a primer, depending on the application. When applied as a topcoat, the amount of coating applied can vary from about 1000 to about 5500 $g/m^2$ of the structural surface, depending on the application. When applied as a primer said coating may suitably have a dry film thickness ranging from 60 μm to 500 μm, depending on the substrate coated and the application. When applied as a topcoat said coating may suitably have a dry film thickness ranging from 400 μm to 2000 μm, depending on the substrate coated and the application.

The coating compositions according to the invention have surprising slip-resistance properties, high solid content and low VOC. These coating compositions are therefore particularly suited for use as anti-skid coatings.

It has been found that the anti-skid coating compositions of the present invention have surprising properties such as non-flammability, weather resistance, quick cure, good adhesion on steel and concrete structures exposed to atmospheric marine conditions, good water and corrosion resistance. Furthermore, They can be easily applied by roller or spray and provide a surface with a high degree of strength and impact resistance. These coatings have the ability to withstand large temperature extremes during application and wear and have good resistance against impact.

These anti-skid coating compositions when applied create a surface profile with enhanced non-skid properties over the current art. The sprayed compositions provide a surface of high coefficient of friction. The coated substrates have very good qualities of mechanical surface bonding strength and abrasion resistance. For example, when applied on flight decks, the coatings can withstand 5,000 to 15,000 landings and tail hook impacts of jet airplanes landing on carrier decks. The coatings compositions according to the invention can be applied to various substrates non limiting examples of which include steel, aluminum, glass-reinforced plastic (GRP), wood, concrete floors or decks and the like. The present invention further encompasses the substrates coated with the coatings compositions according to the invention. The coated substrates according to the invention have very good nonskid properties and very high

resistance to aggressive solvents and to corrosion in a marine atmosphere. They are immune to ultraviolet and are perfectly nonflammable.

For example, the coating compositions according to the invention are particularly useful for the protection of shipping surfaces, ship decks, flight decks, offshore oil prospecting and recovery platforms and the gangways or passageways for moving handling machinery in factories or warehouses, floors of gymnasiums etc. The anti-skid coatings according to the invention are particularly suitable for ships and decks and can be used to prevent sliding and movement of aircraft, personnel, and machinery.

The invention will be more readily understood by reference to the following examples, which are included merely for purposes of illustration of certain aspects and embodiments of the present invention and are not intended to limit the invention.

**Example 1**: Synthesis of an epoxy-modified polysiloxane as binder for use in the coating according to the invention

663.7 g of Epikote 834 (Resolution) in 165.9 g of xylene are added to 261.3 g of polysiloxane resin (Silres SY231, Wacker) in a reaction vessel under nitrogen atmosphere equipped with a mechanical stirrer, a distilling column and a condenser. 0.9 g of titanium (IV) butoxide is added. The mixture is then heated at 140°C during 1 hour. The last volatile alcohols formed during reaction are then removed by applying vacuum. The mixture is then diluted with xylene to a solid content of 85.15%. The Haake viscosity at 23°C is 34 dPa.s and the epoxy value (in solution) is 2148 mmole/kg. The molecular weight measured by GPC (Gel permeation chromatography) is (Mw) 3236 and the polydispersity is 6.4. NMR analysis showed that the conversion of the methoxy groups is 60.8% and the butoxy groups is 8.1%.

**Example 2:** Synthesis of an epoxy-modified polysiloxane as binder for use in the coating according to the invention

830.8 g of Epikote 834 (Resolution Performance Products) in 125 ml of heptane are added to 326.6 g of polysiloxane resin (Silres SY231, Wacker) in a reaction vessel under nitrogen atmosphere equipped with a mechanical stirrer, a distilling column and a condenser. 0.9 g of titanium (IV) butoxide is added. The reaction mixture is then gradually heated to a temperature of 120°C and this temperature is kept until all azeotrope is distilled off. Then the reaction mixture is heated at 145°C to reach a cone and plate viscosity of 8.3 dPa.s at 75°C and vacuum is applied until all solvents is distilled off to reach a cone and plate viscosity of 4.4 dPa.s at 100°C. The mixture is then diluted with 386.3 g of 4-chlorobenzotrifluoride (a non-Hazardous Air Pollutant solvent). The Haake viscosity is 29.2 dPa.s at 23°C and the epoxy value (in solution) is 2137 mmole/kg. The molecular weight measured by GPC (Gel permeation chromatography) is (Mw) 4368 and the polydispersity is 8.6.

A hardener was used to cure both samples (Examples 1 and 2) (stoichiometry = 71 %). Said hardener is an epoxy-amine adduct known in the state of the art (see C.H. Hare in "Protective Coatings", chap.15, pp211-212, tpc Books, 1994).

The samples were cured for 24 hours at room temperature and their hardness and their resistance to solvent was studied. The results are shown in Table 1.

Table 1

| Sample | Hardness (König) | Solvent resistance |
|---|---|---|
| Example 1 | 55 strokes | dissolving of coating |
| Example 2 | 80 strokes | less dissolving of coating |

The samples were cured for 9 days at room temperature, and their hardness and their resistance to solvent was studied. The results are shown in Table 2.

Table 2

| Sample | Hardness (König) | Solvent resistance |
|---|---|---|
| Example 1 | 90 strokes | softening of coating |
| Example 2 | 83 strokes | Less softening of coating |

**Example 3**: Coating compositions according to the invention

This example describes coating compositions according to the invention, and more specifically a two-component (also referred as two pack) primer and a two-pack topcoat composition. The coating composition comprises in the first component (A) an epoxy-functional polysiloxane as a binder and in the component (B) an amino hardener.

Tables 3 and 4 list the composition of the component (A) hereunder referred as the Base component (A) for the primer (Table 3) and for the topcoat (Table 4).

The component (B) comprises an amino hardener, which is an epoxy-amine adduct known in the state of the art (see C.H. Hare in "Protective Coatings", chap.15, pp211-212, tpc Books, 1994). The amine equivalent in weight is 210.3 g/eq. Additional solvents and catalysts were added to said component (B).

Table 3:

| Primer coat Base composition | | |
|---|---|---|
| **Base Component (A)** | **Type** | **% weight** |
| Epoxy-polysiloxane from ex.1 | Resin | 17.10 |
| Polyamide | Thixotropic agent | 0.80 |
| Titanium dioxide | Pigment | 3.00 |
| Aluminum oxide | Filler | 20.55 |
| Silicon dioxide | Filler | 51.30 |
| Aluminum paste | Pigment | 3.00 |
| Epoxy silane | Adhesion promoter | 0.25 |
| Xylene | Solvent | 4.00 |
| Total | | 100.0 |

The base component (A) of the primer coat has an epoxy equivalent weight (EEW) of 2427.2 g/eq. epoxy.

The mixing ratio used is 93.9% base component (A) to 6.1 % hardener component (B).

Table 4:

| Topcoat Base composition | | |
|---|---|---|
| **Base Component (A)** | **Type** | **% weight** |
| Epoxy polysiloxane from ex. 1 | Resin | 19.65 |
| Polyamide | Thixotropic agent | 1.73 |
| Flammruss 101 | Pigment | 1.64 |
| Titanium dioxide | Pigment | 5.39 |
| Aluminum oxide | Filler | 16.57 |
| Aluminum/iron (III) oxide | Abrasive filler | 44.7 |
| Xylene | Solvent | 7.61 |
| Isobutanol | Solvent | 2.70 |
| Total | | 100.0 |

The base component (A) of the topcoat has an epoxy equivalent weight (EEW) of 2167.6 g/eq. epoxy.

The mixing ratio used is 93.7% base component (A) to 6.3 % hardener component (B).

The coating system described above, which consisted of a two-pack primer and a two-pack topcoat, provide a rough textured, anti-slip finish to the surface coated therewith. Moreover, they provide protection against corrosion and retain their anti-slip properties under conditions of heavy wear and frequent contact with sea water.

**Example 4**: Wear and anti-slip testing of the coating compositions according to the invention

Four coated system panels were subjected to wear and anti-slip testing. The panels consist of burnished steel of the following dimensions: 300x125x2 mm. They were coated with a primer coat and a topcoat which compositions are described in Example 3. The coated panels were tested for wear resistance and anti-slip properties 7 days after

application of the final coat.

Wear tests were carried on panels 1 and 2. Anti-slip tests were carried out on panels 3 and 4. Anti-slip testing on the worn coating was carried out on the wear test panels (panels 1 and 2) on conclusion of the wear tests. The anti-slip properties for new and worn coatings were carried out under wet and oil conditions.

For the wear resistance determination, the coated panel under test is weighed beforehand to an accuracy of ± 0.01 g (M1) and then clamped to an apparatus. The panel under test is held in a horizontal position, painted surface upwards, on a firm base so that no sagging or bending can occur. A loaded metal blade (wear blade) is put into contact with the panel and then drawn back and forth (one cycle). The wear blade is 100x20x1 mm and consists of mild steel. For the purpose of the test, the wear blade is loaded with a 5000 g weight of suitable size. The stroke length is approximately 230 mm and the speed is approximately 37 wear cycles/minute. A mechanical counter records the number of wear cycles. The panel is then worn for 250 cycles. The panel is removed from the apparatus, the debris are brushed away, and the tested panel is carefully re-weighed (M2). The panel is then examined to see whether the blade has penetrated the substrate.

The results of wear testing are detailed in Table 5.

Table 5

| Panels | M1 (g) | M2 (g) | M1-M2 (g) |
|---|---|---|---|
| Panel 1 | 645.7 | 645.11 | 0.59 |
| Panel 2 | 648.25 | 647.48 | 0.76 |

After examination of the panels, it could be seen that the blade has not penetrated the surface of the panels. Moreover, the weight loss from the test was within specification limits (< 5gms).

These results show that the coatings according to the invention are wear resistant.

The anti-slip properties for new and worn coatings were carried out under wet and oil conditions. The coated panels under test were mounted in a Pendulum Skid Tester, designed by Transport Road Research Laboratory of UK (TRRL). The Skid Tester measures the frictional resistance between a rubber slider mounted on the end of a pendulum arm and the test surface. A pendulum consisting of a tubular arm rotates about a spindle attached to a vertical pillar. At the end of the tubular arm, a head of constant mass is fitted with a rubber slider. The pendulum is released from a horizontal position so that it strikes the sample surface with a constant velocity. The distance traveled by the head after striking the sample is determined by the friction of the sample surface. A reading of Skid Resistance Values is obtained.

The panels were mounted in the apparatus and a liberal quantity of water was applied. The skid resistance was immediately determined using the Skid tester. The same test was repeated after applying a liberal quantity of oil OM-100.

The results of anti-slip testing are shown in Table 6.

Table 6

| Panels | Wet anti-slip (average TRL reading) | Oil anti-slip (average TRL reading) |
|---|---|---|
| Panel 1 and 2 (worn coating) | 71.25 | 46.25 |
| Panel 3 and 4 (new coating) | 76.25 | 51.25 |

The oil and wet anti-slip values measured show that the tested panels coated with coatings according to the invention, met the specification requirements for a new unused coating, which are: wet ≥70, oily ≥30; and for worn coatings which are wet ≥60 and oily ≥20.

**Example 5:** Chemical resistance testing of the coating compositions according to the invention

Surfaces coated with a primer coat and a topcoat as described in example 3, were subjected to the following chemicals: Jet fuel 40 °C, lubricant oil 40 °C, MCS-352B hydraulic assembly lubricant 40 °C, Caustic soda 50% 60°C, Water 60 °C, OM-100 lubricating oil 40°C, OX38 lubricating oil 40 °C.

These coated surfaces were resistant to the above-mentioned chemicals after 6 months of exposure.

The coatings according to the invention when applied to a substrate have good water and corrosion resistance, good resistance against impact, tear and wear, good chemical resistance and good durability. Furthermore, they present a rough surface, they are though, and have a long-term flexibility.

**Claims**

1. Coating composition comprising at least two components:

   a component (A) comprising:

   - a polysiloxane of formula (1) in a amount ranging from 10 to 80 % by weight, wherein each $R^1$ is independently selected from the group comprising alkyl and aryl radicals, each $R^2$ is independently selected from the group comprising hydrogen, alkyl and aryl radicals, n is selected so that the molecular weight for the polysiloxane is in the range of from 400 to 10,000, $R^3$ is a bivalent radical or $-O-R^3-(X)_z$ is hydroxy, alkoxy or aryloxy, z is 1, 2 or 3 and X is a reactive functional group for reacting with amine radicals and wherein 0 to 90 % of $-O-R^3-(X)_z$ is hydroxy, alkoxy or aryloxy,

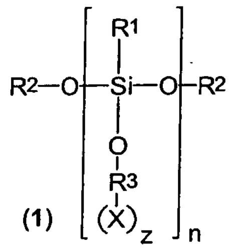

**(1)**

   - one or more filler and/or an aggregate in an amount ranging from 20 to 90 % by weight,
   - optionally one or more pigment
   - optionally one or more additive, and

   a component (B) comprising

   - one or more amino hardener and
   - optionally one or more catalyst.

2. Coating composition according to claim 1, wherein said filler and/or aggregate is in an amount ranging from 40 to 90%, preferably from 50 to 90 %, more preferably from 65 to 80%.

3. Coating composition according to any of claims 1 or 2, wherein said filler and/or aggregate is selected from the group comprising aluminum oxide, aluminum/iron oxide, barium sulphate, boron nitride, boron powder, calcite and clays, corundum particles, garnet, glass, ground limestone, ground walnut shells gypsum, kaolin, magnesium oxide, metal grains, micas, mixture of chlorite (hydrosilicate of magnesium, potassium and aluminum) mica and quartz, nepheline syenite (anhydrous sodium potassium aluminum silicate), particles of plastic materials, particles of pumice stone, perlite, quartz, rubber chips, silica, siliceous sand, silicon carbide, silicon dioxide, slag, talc, tungsten carbide powder, waste plastic aggregate, wollastonite, and the like or any combination of these.

4. Coating composition according to claim 3, wherein said filler and/or aggregate is selected from the group comprising aluminum oxide, silicon dioxide, aluminum/iron oxide, magnesium oxide or a combination thereof, and the like.

5. Coating composition according to any of claims 1 to 4, wherein said polysiloxane has the following stoichiometric formula

$$R^1_a R^2_b (R^{10}O)_c SiO_{\frac{(4-a-b-c)}{2}},$$

   wherein each $R^{10}$ is independently selected from hydrogen, alkyl, aryl, or $-R^3-(X)_z$, and $R^1$, $R^2$, $R^3$, X and z have the same meaning as that defined above, a and b are each a real number from 0.0 to 2.0, more in particular from 0.1 to 2.0, c is a real number from 0.1 to 1.0, b/a is ranging from 0.2 to 2.0 and a+b+c is lower than 4, and wherein 0 to 90 % of $-O-R^{10}$ is hydroxy, alkoxy or aryloxy.

**6.** Coating composition according to any of claims 1 to 5, wherein the bivalent radical $R^3$ is selected from the group comprising alkylene, alkenylene, arylene, aralkylene, aralkenylene, aryloxy, aminoalkylene, -C(=O)-, -C(=S)-, -S(=O)$_2$-, alkylene-C(=O)-, alkylene-C(=S)-, alkylene-S(=O)$_2$-, -NR$^4$-C(=O)-, -NR$^4$-alkylene-C(=O)-, or -NR$^4$-S(=O)$_2$ whereby either the C(=O) group or the S(=O)$_2$ group is attached to the NR$^4$ moiety, optionally substituted by alkyl, aryl, cycloalkyl, halogen, hydroxy, alkoxy, thioalkyl, amino, amino derivatives, amido, amidoxy, nitro, cyano, keto, acyl derivatives, acyloxy derivatives, carboxy, ester, ether, esteroxy, sulfonic acid, sulfonyl derivatives, sulfinyl derivatives, heterocycle, alkenyl or alkynyl, wherein $R^4$ is hydrogen, alkyl, alkenyl, aralkyl, cycloalkyl, cycloalkylalkyl, aryl, heterocycle or heterocycloalkyl; or the radical -O-$R^3$-$(X)_z$ can be selected from the group comprising hydroxy, alkoxy, aryloxy or radical of formula (I), (II), (III), (IV), (V), (VI), (VII), (VIII), wherein $R^6$ is H or 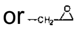 and m is an integer from 0 to 10.

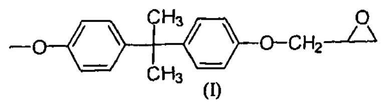

(I)

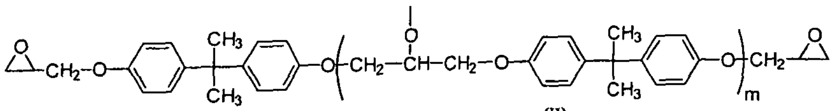

(II)

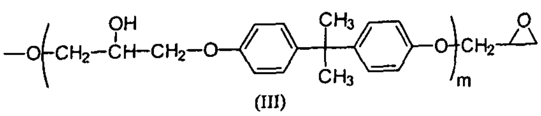

(III)

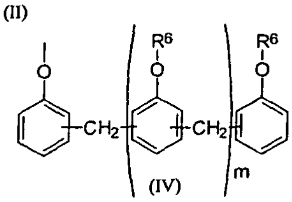

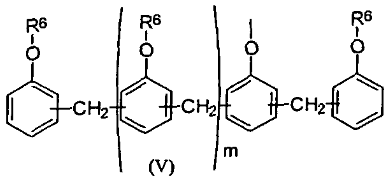

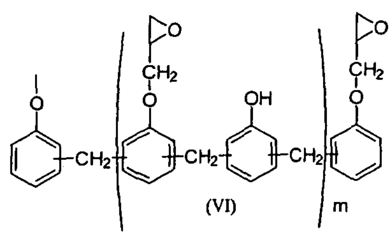

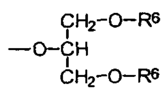

(VII)

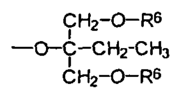

(VIII)

**7.** Coating composition according to any of claims 1 to 6, wherein X is selected from the group comprising unsaturated ester, imidyl, phthalimidyl, cyclocarbonate, acetylalkanoate, acetylalkylamide, epoxy, cyclic anhydride, carbamate, isocyanate, vinyl.

**8.** Coating composition according to any of claims 1 to 7, wherein X is selected from the group comprising acrylate, methacrylate, maleimide, succinimide, glycerolcarbonate, acetylacetanoate, epoxy, (cyclic) succinic anhydride, phthalic anhydride, isocyanate, and vinyl.

**9.** Coating composition according to any of claims 1 to 8, wherein the functional group -$R^3(X)_z$ is selected from the group comprising acrylate, methacrylate, maleimide, succinimide, glycerolcarbonate, acetylacetanoate, cyclic succinic anhydride and phthalic anhydride.

**10.** Coating composition according to any of claims 1 to 9, wherein the polysiloxane has following formulas (a), (b), (c), (d), (e), (f), (g), (h), (i), (j), (k), (l);

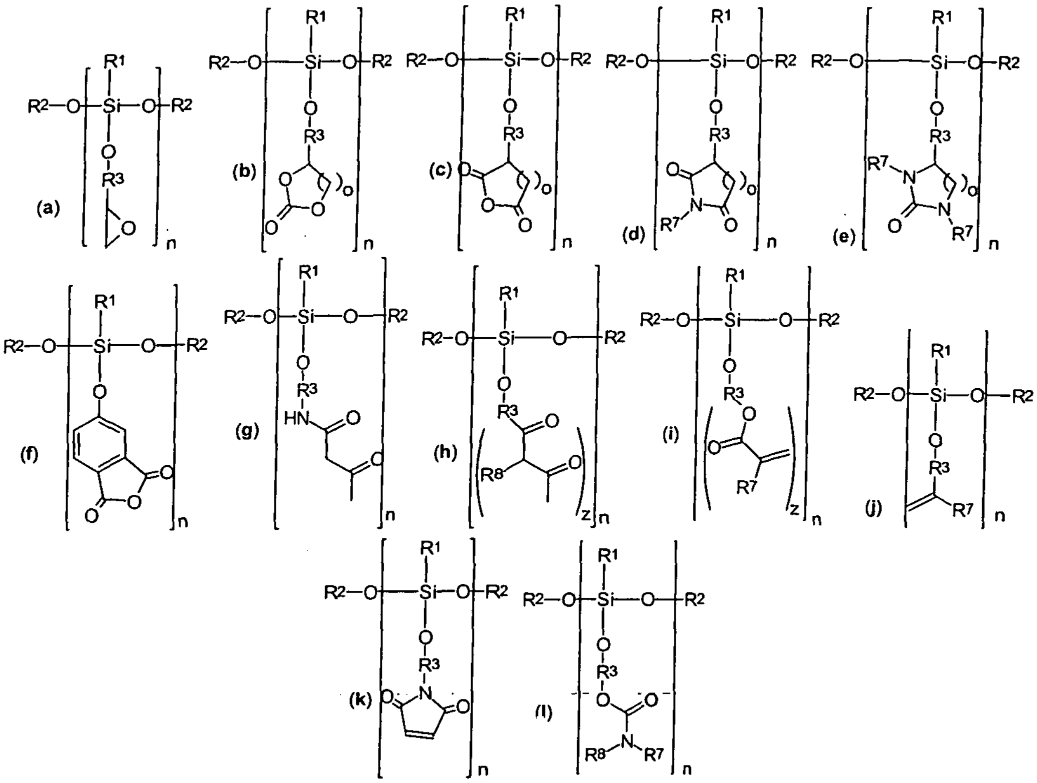

(a) (b) (c) (d) (e) (f) (g) (h) (i) (j) (k) (l)

wherein $R^1$, $R^2$, $R^3$ and n have the same meaning as that defined above, $R^7$, $R^8$ represent each independently a hydrogen, alkyl, alkenyl, aralkyl, cycloalkyl, cycloalkylalkyl, aryl, heterocycle or heterocycloalkyl, z is 1, 2 or 3 and o is 1, 2 or 3.

**11.** Coating composition according to any of claims 1 to 10, wherein said amino hardener is a polyamine.

**12.** Coating composition according to any of claims 1 to 11, wherein said amino hardener is an epoxy-amine adduct.

**13.** Coating composition according to any of claims 1 to 12, wherein said additive is selected from the group comprising abrasion resistance improvers, absorbents, rheological modifiers, plasticizers, antifoaming agents, antifouling agents, thixotropic agents, pigments, fillers, aggregates, extenders, reinforcing agents, flow control agents, catalysts, pigment pastes, mineral oils, wetting agents, adhesion promoters, thickening agents, flame-retarding agents, antioxidants, elastomers, antisettling agents, diluents, UV light stabilizers, air release agents, solvents, dispersing aids, and mixtures thereof.

**14.** Coating composition according to any of claims 1 to 13, comprising in the range of from 60 to 96 % by weight of component (A) and 4 to 40 % by weight of the component (B).

**15.** Use of a coating composition according to any of claims 1 to 14 as an anti-skid coating.

**16.** Use of a coating according to any of claims 1 to 14, on shipping surfaces, ship decks, flight decks, offshore oil prospecting and recovery platforms and the gangways or passageways for moving handling machinery in factories or warehouses, floors of gymnasiums.

**17.** Substrate coated with a coating composition according to any of claims 1 to 14.

**18.** Method for preparing a fully cured coating composition according to any of claims 1 to 14, comprising the step of forming a base component (A) by combining
as a binder a polysiloxane of formula (1) in a amount ranging from 10 to 60 % by weight, wherein each $R^1$ is independently selected from the group comprising alkyl and aryl radicals, each $R^2$ is independently selected from the group comprising hydrogen, alkyl and aryl radicals, n is selected so that the molecular weight for the polysiloxane is in the range of from 400 to 10,000, $R^3$ is a bivalent radical or -O-$R^3$-$(X)_z$ is hydroxy, alkoxy or aryloxy, z is 1, 2 or 3 and X is a reactive functional group for reacting with amine radicals and wherein 0 to 90 % of -O-$R^3$-$(X)_z$ is hydroxy, alkoxy or aryloxy,

(1) 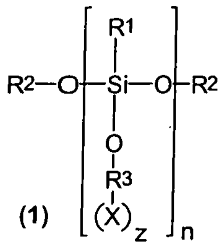

with one or more filler and/or an aggregate in an amount ranging from 40 to 90 % by weight, optionally one or more pigment, optionally one or more additive, and
curing the base component (A) by adding thereto a component (B) comprising
one or more amino hardener and optionally one or more catalyst to facilitate the curing.

**19.** Multicoat system comprising one or more priming coat and one or more topcoat, wherein said priming and topcoats comprise the coating composition according to any of claims 1 to 14.

European Patent Office

# EUROPEAN SEARCH REPORT

Application Number
EP 03 44 7265

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 6 344 520 B1 (GREENE JAMES D) 5 February 2002 (2002-02-05) * claims; examples * --- | 1-10 | C08G77/14 C09D183/04 C09D163/00 |
| A | US 5 187 251 A (WEWERS DIETMAR ET AL) 16 February 1993 (1993-02-16) * the whole document * --- | 1-10 | |
| A | EP 0 430 102 A (DOW CORNING KK) 5 June 1991 (1991-06-05) * the whole document * --- | 1-10 | |
| A | DE 42 16 923 A (FRIEDRICH HOLGER ;JANSEN IRENE DR (DE); RUEHLMANN KLAUS PROF DR (D) 25 November 1993 (1993-11-25) * claims; examples * --- | 1-10 | |
| A | DE 42 34 959 C (GOLDSCHMIDT AG TH) 7 April 1994 (1994-04-07) * claims; examples * ----- | 1-10 | |
| | | | TECHNICAL FIELDS SEARCHED (Int.Cl.7) |
| | | | C08G C09D |

The present search report has been drawn up for all claims

2

| Place of search | Date of completion of the search | Examiner |
|---|---|---|
| MUNICH | 18 May 2004 | Kolitz, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........
& : member of the same patent family, corresponding document

EPO FORM 1503 03.82 (P04C01)

## ANNEX TO THE EUROPEAN SEARCH REPORT ON EUROPEAN PATENT APPLICATION NO. EP 03 44 7265

This annex lists the patent family members relating to the patent documents cited in the above-mentioned European search report.
The members are as contained in the European Patent Office EDP file on
The European Patent Office is in no way liable for these particulars which are merely given for the purpose of information.

18-05-2004

| Patent document cited in search report | Publication date | Patent family member(s) | Publication date |
|---|---|---|---|
| US 6344520 B1 | 05-02-2002 | AT 229993 T | 15-01-2003 |
| | | AU 745890 B2 | 11-04-2002 |
| | | AU 4261900 A | 04-01-2001 |
| | | BR 0002850 A | 28-11-2000 |
| | | CA 2310283 A1 | 24-12-2000 |
| | | CN 1279250 A | 10-01-2001 |
| | | DE 60001036 D1 | 30-01-2003 |
| | | DE 60001036 T2 | 30-04-2003 |
| | | EP 1086974 A1 | 28-03-2001 |
| | | ES 2188447 T3 | 01-07-2003 |
| | | JP 2001031767 A | 06-02-2001 |
| | | NO 20003306 A | 27-12-2000 |
| | | SG 90131 A1 | 23-07-2002 |
| | | US 2002156187 A1 | 24-10-2002 |
| US 5187251 A | 16-02-1993 | DE 4023556 A1 | 30-01-1992 |
| | | DE 59104664 D1 | 30-03-1995 |
| | | EP 0468305 A2 | 29-01-1992 |
| EP 0430102 A | 05-06-1991 | JP 2108670 C | 21-11-1996 |
| | | JP 3166274 A | 18-07-1991 |
| | | JP 8019355 B | 28-02-1996 |
| | | CA 2030749 A1 | 25-05-1991 |
| | | EP 0430102 A2 | 05-06-1991 |
| DE 4216923 A | 25-11-1993 | DE 4216923 A1 | 25-11-1993 |
| DE 4234959 C | 07-04-1994 | DE 4234959 C1 | 07-04-1994 |

EPO FORM P0459

For more details about this annex : see Official Journal of the European Patent Office, No. 12/82